# DEMANDE DE BREVET EUROPEEN

(11) **EP 0 974 893 A1**
(43) Date de publication de la demande: **26.01.2000**
(21) Numéro de dépôt: 99401787.9
(22) Date de dépôt: 16.07.1999
(51) Int. Cl.: G06F 3/16, H04R 3/00

(54) **Circuit de commande de son pour système de reproduction audiovisuelle numérique intelligent**

(30) Priorité: 22.07.1998 FR 9809350
(71) Demandeur: TOUCHTUNES MUSIC CORPORATION, Las Vegas, NV 89104 (US)
(72) Inventeur: Nathan, Guy, 91330 Yerres (FR)
(74) Mandataire: Debay, Yves

(57) **Abrégé**

Circuit (5) de commande de son, comprenant un port jeu, installé sur un système de reproduction audiovisuelle numérique géré par un système d'exploitation (51) caractérisé en ce que le port jeu du circuit (5) de commande de son est utilisé pour créer un accès à la configuration du système de reproduction audiovisuelle et/ou des fonctions supplémentaires de management du système de reproduction audiovisuelle

## Description

La présente invention concerne un circuit de commande de son pour système de reproduction audiovisuelle numérique intelligent.

Il est connu dans l'art antérieur que les circuits de commande de son comportent un port jeu utilisé pour connecter une manette de jeu (Joystick).

Il est également connu dans l'art antérieur que, lors de l'initialisation d'une unité centrale munie d'un circuit de commande de son relié à des moyens de reproduction sonore, il se crée un phénomène sonore dans les haut-parleurs lors de l'activation du circuit de commande de son. Ce phénomène sonore se traduit en règle générale par un " pop " audible dans les haut-parleurs.

La présente invention a donc pour objet de pallier les inconvénients de l'art antérieur en proposant un circuit de commande de son offrant un accès à la configuration d'un système de reproduction audiovisuelle et permettant de créer des fonctions supplémentaires pour un système de reproduction audiovisuelle numérique intelligent.

Ce but est atteint par le fait que le circuit de commande de son est installé sur un système de reproduction audiovisuelle numérique et est caractérisé en ce que le port jeu du circuit de commande de son est utilisé pour créer un accès à la configuration du système de reproduction et/ou des fonctions supplémentaires de management du système de reproduction audiovisuelle.

Selon une autre particularité, une première broche du port jeu est mise à la masse, par l'intermédiaire d'un premier interrupteur, pour créer une fonction d'alarme de température du système de reproduction audiovisuelle.

Selon une autre particularité, une deuxième broche du port jeu est mise à la masse, par l'intermédiaire d'un deuxième interrupteur, pour augmenter le volume.

Selon une autre particularité, une troisième broche du port jeu est mise à la masse, par l'intermédiaire d'un troisième interrupteur, pour diminuer le volume.

Selon une autre particularité, une quatrième broche du port jeu est mise à la masse, par l'intermédiaire d'un quatrième interrupteur, lorsqu'un microphone est activé et permet d'obtenir une fonction augmentant le volume du microphone et diminuant le volume d'autres sources audio.

Selon une autre particularité, les première, deuxième, troisième et quatrième broches du port jeu sont mises à la masse, par l'intermédiaire d'un cinquième interrupteur, pendant un bref délai, pour obtenir la fonction d'accès aux fonctions de modification de configuration du système.

Selon une autre particularité, les première, deuxième, troisième et quatrième broches du port jeu sont mises à la masse, par l'intermédiaire d'un cinquième interrupteur, pendant un long délai pour obtenir une commande d'annulation de la sélection musicale en cours d'écoute et de celles qui sont dans une file d'attente.

Un autre but de l'invention est de proposer un circuit de commande de son qui inhibe la production de son dans les haut-parleurs pendant la durée d'initialisation du système de reproduction audiovisuel afin d'éviter tout phénomène sonore.

Ce but est atteint par le fait que le système d'exploitation envoie, via le circuit de commande de son, d'une part un ordre d'ouverture d'un circuit électrique mettant l'amplificateur du système de reproduction audiovisuelle hors service, pendant la durée d'initialisation du système de reproduction audiovisuel, et d'autre part un ordre de fermeture du même circuit à l'issue de l'initialisation mettant l'amplificateur en service.

Un autre but de l'invention est de proposer une sécurisation, via le circuit de commande de son, d'informations spécifiques au système de reproduction audiovisuelle.

Ce but est atteint par le fait qu'une entrée du circuit de commande de son est connectée à un circuit intégré comportant une mémoire non volatile permettant au système d'exploitation, via le circuit de commande de son, de lire ou de stocker des informations sur la mémoire du circuit intégré via le circuit de commande de son.

Selon une autre particularité, les informations stockées dans la mémoire du circuit intégré ne sont accessibles qu'après authentification de l'utilisateur par l'intermédiaire d'un code.

D'autres particularités et avantages de la présente invention apparaîtront plus clairement à la lecture de la description ci-après faite en référence aux dessins annexés dans lesquels :
- la figure 1 représente un schéma électrique d'un système de reproduction audiovisuelle numérique intelligent de l'art antérieur.
- la figure 2 représente un schéma électrique du port jeu du circuit de commande du son selon l'invention.

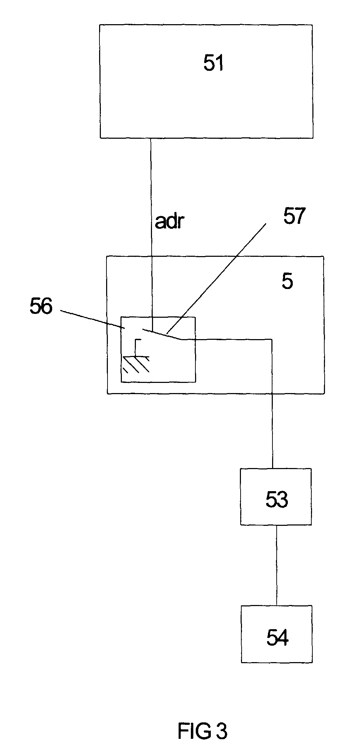

- la figure 3 représente un détail du schéma électrique entre le circuit de commande de son selon l'invention et les moyens de reproduction sonore.

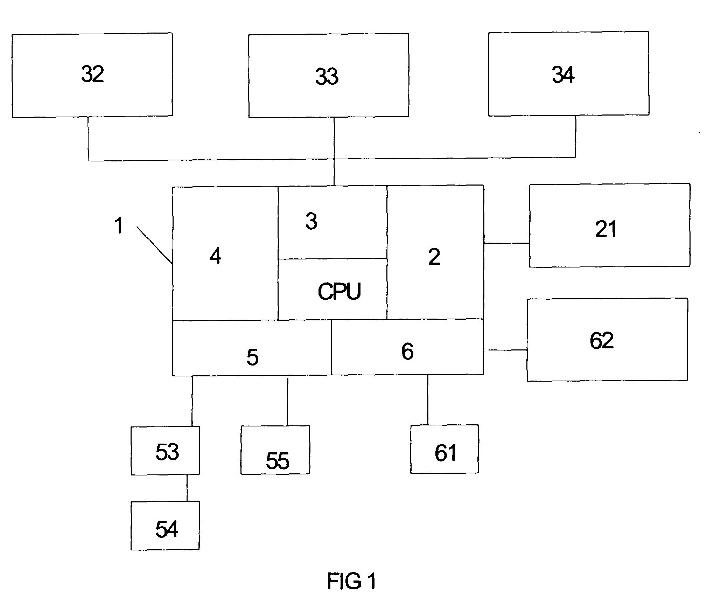

La figure 1 représente un schéma électrique d'un système de reproduction audiovisuelle numérique intelligent de l'art antérieur. Ce système de reproduction audiovisuelle, appelé aussi juke-box, a été décrit dans une demande de brevet internationale PCT/FR94/01185 déposée par la requérante. Ce système comprend, notamment, une unité centrale (1) qui commande et gère un circuit (5) de commande de son, un circuit (4) de commande des télécommunications, un circuit (3) de commande des entrées, un circuit (2) de commande de la mémorisation (21) de masse, un circuit (6) de commande des moyens de visualisation. Les moyens de visualisation se composent principalement d'un moniteur vidéo (62) à écran plat sans entrelacement de type SVGA à haute résolution et faible rayonnement, c'est ce moniteur qui est utilisé pour la reproduction d'images (par exemple les couvertures d'albums des sélections musicales), de graphiques ou de clips vidéo.

Pour la reproduction des informations sonores des sélections musicales, le système comporte des haut-parleurs (54) recevant le signal d'un amplificateur-tuner (53) relié au circuit (5) de commande de son de type synthétiseur de musique prévu pour supporter un grand nombre de sources d'entrée tout en fournissant une sortie présentant une qualité de type CD (disque compact), telle que, par exemple, l'adaptateur audio multimédia à microprocesseur, du type carte "Sound Blaster". Le système peut comporter également d'autres sources audio pour la reproduction du son.

Le système de reproduction audiovisuelle gère, par le biais de son circuit (3) contrôleur d'entrée, un écran tactile (33), qui inclut un panneau de revêtement de la vitre utilisant la "technologie avancée d'onde de surface" ainsi qu'un contrôleur de bus de type AT. Cet écran tactile permet, après avoir affiché sur le moniteur vidéo (62) ou l'écran d'un téléviseur (61) diverses informations, la sélection d'une de ces informations, soit par les clients, soit par le gérant ou le propriétaire du système pour les informations de commande et de contrôle de gestion. L'écran tactile était également utilisé à des fins de maintenance en combinaison avec un clavier (34) externe qui pouvait être relié au système qui possédait pour cela un connecteur de clavier, contrôlé par un verrou à clé (32) à travers le circuit d'interface. Le système est logé dans un châssis ou bâti en acier.

Outre ces éléments, un microphone (55) sans fil est relié au contrôleur de son (5), ce qui permet de transformer ce dernier en un puissant système d'annonces et d'informations destinées au public ou éventuellement en machine de karaoké.

Le logiciel d'exploitation du système est élaboré autour d'une librairie d'outils et de services très largement orientée vers le domaine audiovisuel dans un univers multimédia. Cette librairie inclut un système d'exploitation multitâche performant qui autorise efficacement l'exécution simultanée de multiples fragments de code. Ce logiciel d'exploitation permet ainsi les exécutions concurrentes, de manière ordonnée et en évitant tout conflit d'opérations réalisées sur les moyens de visualisation, les moyens de reproduction sonores de même que la gestion des liaisons de télécommunication au travers du réseau de distribution. De plus, ce logiciel présente une grande flexibilité. Ce système ne permet pas d'accéder à la configuration du système, par exemple pour le réglage du volume autrement que par un clavier et un connecteur à clavier contrôlé par un verrou à clé.

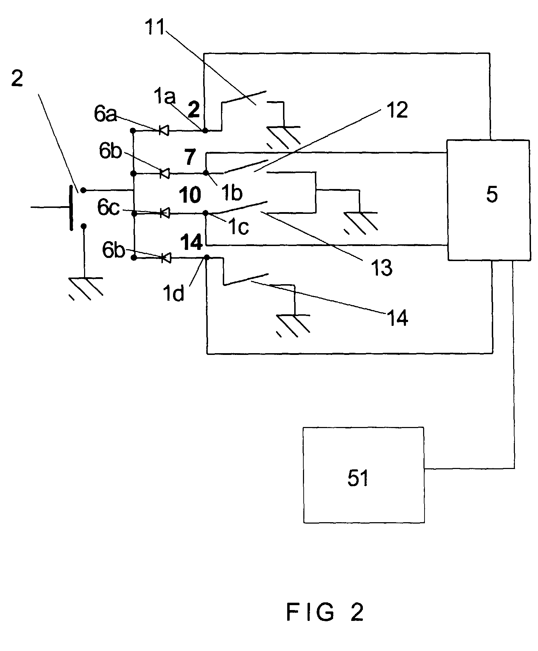

La figure 2 représente un schéma électrique du port jeu du circuit de commande de son selon l'invention. Quatre broches (1a, 1b, 1c, 1d) du port jeu du circuit (5) de commande du son sont connectées, d'une part chacune à une borne d'un interrupteur respectif (11, 12, 13, 14) dont l'autre borne est à la masse pour mettre la broche respective du port jeu en contact avec la masse lorsque l'interrupteur respectif (11, 12, 13, 14) est en position fermée, et d'autre part, à la cathode d'une diode respective (6a, 6b, 6c, 6d). Les anodes des diodes respectives (6a, 6b, 6c, 6d) sont reliées à un point commun connecté à une même entrée d'un cinquième interrupteur (2) dont l'autre entrée est à la masse pour, en position fermée, mettre simultanément les quatre broches en contact avec la masse. Avantageusement, les broches (1a, 1b, 1c, 1d) du port jeu utilisées pour le montage selon l'invention sont les broches N°2, 7, 10 et 14. Ainsi, ce montage offre la possibilité de gérer des fonctions supplémentaires pour un système de reproduction audiovisuelle. Un premier interrupteur (11) connecté à la broche N°2 permet de gérer une fonction d'alarme de température du système. En effet, en commandant le premier interrupteur (11) par un dispositif de détection de température, il est possible de déclencher la fermeture du premier interrupteur (11) lors du dépassement d'un seuil de température déterminé. L'information de fermeture du premier interrupteur (11) est traduite par le circuit (5) de commande de son et par le système d'exploitation (51) du système de reproduction audiovisuelle en, par exemple l'envoi d'une requête de fonction d'alarme au serveur central. Un deuxième interrupteur (12) connecté à la broche N°7 permet d'augmenter le volume. Il suffit pour cela, par exemple, de mettre en place un bouton de commande sur le châssis du système de reproduction audiovisuelle de sorte qu'une pression sur le bouton provoque la fermeture du contact du deuxième interrupteur (12). La fermeture de deuxième interrupteur (12) est traduite ensuite par l'intermédiaire du circuit (5) de commande de son en un signal exploité par le logiciel du système d'exploitation (51), pour produire une augmentation de volume du son et mémoriser cette nouvelle valeur de référence. Un troisième interrupteur (13) connecté à la broche N°10 permet de façon identique de diminuer le volume. Un quatrième interrupteur (14) est connecté à la broche N°14 et permet de gérer l'utilisation du microphone (55, fig. 1). Le microphone (55, fig. 1) préférentiellement utilisé avec le système de reproduction audiovisuelle est un microphone (55, fig. 1 ) possédant un interrupteur de mise en service. Lorsque l'utilisateur désire utiliser le microphone (55, fig. 1), il actionne cet interrupteur. L'utilisation du microphone (55, fig. 1) provoque la diminution du volume sonore de la sélection musicale en cours d'exécution qui peut subsister en signal de fond et l'augmentation du volume du son provenant du microphone (55, fig. 1). L'utilisation du microphone (55, fig. 1) provoque également la diminution du volume des autres sources audio. Le quatrième interrupteur (14) permet d'effectuer cette opération automatiquement dès que l'utilisateur actionne l'interrupteur du microphone (55, fig. 1) pour parler. En effet, il suffit de relier le quatrième interrupteur (14) à l'interrupteur du microphone (55, fig. 1 ) de façon que, lorsque l'utilisateur actionne l'interrupteur du microphone (55fig. 1), le quatrième interrupteur (14) se ferme et reste fermé tant que l'interrupteur du microphone (55, fig. 1) est actionné. La fermeture du quatrième interrupteur (14) est traduite par le circuit (5) de commande de son en un signal exploité par le logiciel du système d'exploitation (51), en une diminution de l'amplification du signal provenant de la sélection musicale en cours d'exécution et une augmentation du signal provenant du microphone (55, fig 1). Le cinquième interrupteur (2) permet la mise à la masse simultanément des quatre broches (1a, 1b, 1c, 1d) pour effectuer deux fonctions différentes en fonction de la durée pendant laquelle un utilisateur maintient le cinquième interrupteur (2) fermé. Avantageusement, le cinquième interrupteur (2) est relié à un bouton de commande monté sur le châssis du système de reproduction audiovisuelle pour que l'enfoncement du bouton provoque la fermeture du cinquième interrupteur (2). Lorsque le bouton est enfoncé pendant un bref délai, la fermeture du cinquième interrupteur (2) déclenche un compteur. Le non achèvement du comptage et la fermeture du cinquième (2) interrupteur sont traduits par le circuit (5) de commande du son et le système d'exploitation (51) par le déclenchement d'un mode de gestion permettant, notamment, de modifier la configuration du système de reproduction audiovisuelle. Un tel mode de gestion est décrit dans la demande de brevet français N° 94 01185. Lorsque le bouton est enfoncé pendant un délai plus long, le comptage s'achève et la fermeture du cinquième interrupteur (2) à la fin du comptage est traduite par le circuit (5) de commande du son et le système d'exploitation (51) par une commande d'annulation de la sélection musicale en cours d'exécution et de celles qui sont en attente d'être exécutées. Les sélections musicales en attente d'être exécutées sont mémorisées dans un fichier ou file d'attente créé par le système d'exploitation. Le déclenchement de la commande d'annulation provoque l'effacement ou l'initialisation de ce fichier pour qu'aucune sélection musicale ne soit en attente d'exécution. Avantageusement, l'accès aux boutons d'augmentation du volume, de diminution du volume et d'accès au mode de gestion, n'est possible que par l'intermédiaire d'un outil spécifique ou bien ces boutons sont situés dans un espace verrouillé du châssis du système de reproduction audiovisuelle.

Une autre particularité du circuit (5) de commande du son selon l'invention est d'empêcher la production de phénomènes sonores, lors de l'activation du circuit (5) de commande de son, au cours de l'initialisation du système d'exploitation du système de reproduction audiovisuelle. A cet effet, pendant la phase d'initialisation du système de reproduction audiovisuelle, le système d'exploitation (51) envoie, sur le bus d'adresse du circuit (5) de commande du son, un ordre à une adresse donnée pour supprimer, par un interrupteur (57), l'alimentation de l'amplificateur du circuit (5) de commande de son. Cette mise hors service de l'amplificateur, par la fermeture d'un interrupteur électronique (57) commandé par un circuit (56) décodeur d'adresse empêche la production de son dans les haut-parleurs. A la fin de la phase d'initialisation, le système d'exploitation (51) envoie, via le circuit (5) de commande du son, un autre signal d'adresse donné qui, décodé par le circuit (56), provoque l'ouverture de l'interrupteur électronique (57) pour mettre alors l'amplificateur en service normal sans créer de phénomènes sonores dans les haut-parleurs puisque le circuit (5) de commande de son a déjà été activé.

Une autre particularité du circuit (5) de commande de son selon l'invention est que l'une de ses entrées est connectée à un circuit intégré. Il est connu dans l'art antérieur qu'un circuit (5) de commande de son a deux entrées. Le circuit intégré est également connu dans l'art antérieur. Il s'agit d'un circuit, alimenté électriquement uniquement lorsqu'une opération est effectuée, et capable de stocker de l'information série dans une mémoire non volatile. Ainsi, le système d'exploitation peut lire ou écrire des informations sur le circuit, par l'intermédiaire du circuit de commande de son selon l'invention. Avantageusement, le circuit intégré est fixé au châssis du système de reproduction audiovisuelle et contient des informations concernant, notamment, le numéro de série du système audiovisuel et des informations de base sur la configuration de système de reproduction audiovisuelle, telles que le volume sonore, le nombre de crédit, la version du système d'exploitation... Avantageusement, les informations stockées dans la mémoire du circuit intégré ne sont accessibles qu'après authentification de l'utilisateur par la saisie d'un code.

Il est clair que d'autres modifications à la portée de l'homme du métier entrent dans le cadre de l'invention

## Revendications

1. Circuit (5) de commande de son, comprenant un port jeu, installé sur un système de reproduction audiovisuelle numérique géré par un système d'exploitation (51) caractérisé en ce que le port jeu du circuit (5) de commande de son est utilisé pour créer un accès à la configuration du système de reproduction audiovisuelle et/ou des fonctions supplémentaires de management du système de reproduction audiovisuelle.

2. Circuit (5) de commande de son selon la revendication 1, caractérisé en ce qu'une première broche (1a) du port jeu est mise à la masse, par l'intermédiaire d'un premier interrupteur (11), pour créer une fonction d'alarme de température du système de reproduction audiovisuelle.

3. Circuit (5) de commande de son selon la revendication 1 ou 2, caractérisé en ce qu'une deuxième broche (1b) du port jeu est mise à la masse, par l'intermédiaire d'un deuxième interrupteur (12), pour augmenter le volume.

4. Circuit (5) de commande de son selon l'une des revendications 1 à 3, caractérisé en ce qu'une troisième broche (1c) du port jeu est mise à la masse, par l'intermédiaire d'un troisième interrupteur (13), pour diminuer le volume.

5. Circuit (5) de commande de son selon l'une des revendications 1 à 4, caractérisé en ce qu'une quatrième broche (1d) du port jeu est mise à la masse, par l'intermédiaire d'un quatrième interrupteur (14), lorsqu'un microphone est activé, et permet d'obtenir une fonction augmentant le volume du microphone et diminuant le volume d'autres sources audio.

6. Circuit (5) de commande de son selon l'une des revendications 1 à 5, caractérisé en ce qu'une première, deuxième, troisième et quatrième broches (1a, 1b, 1c, 1d) du port jeu sont mises à la masse, par l'intermédiaire d'un cinquième interrupteur (2) pendant un bref délai, pour obtenir la fonction d'accès aux fonctions de modification de configuration du système.

7. Circuit (5) de commande de son selon l'une des revendications 1 à 6, caractérisé en ce qu'une première, deuxième, troisième et quatrième broches (1a, 1b, 1c, 1d) du port jeu sont mises à la masse, par l'intermédiaire d'un cinquième interrupteur (2) pendant un long délai, pour obtenir une commande d'annulation de la sélection musicale en cours d'écoute et de celles qui sont dans une file d'attente.

8. Circuit de commande de son installé sur un système de reproduction géré par un système d'exploitation caractérisé en ce que le système d'exploitation envoie, via le circuit de commande de son, d'une part un ordre d'ouverture d'un circuit électrique mettant l'amplificateur du système de reproduction audiovisuelle hors service pendant la durée d'initialisation du système de reproduction audiovisuel, et d'autre part un ordre de fermeture du même circuit à l'issue de l'initialisation, mettant l'amplificateur en service.

9. Circuit de commande de son, comprenant au moins une entrée, installé sur un système de reproduction audiovisuelle géré par un système d'exploitation caractérisé en ce qu'une entrée du circuit de commande de son est connectée à un circuit intégré comportant une mémoire non volatile permettant au système d'exploitation de lire ou de stocker des informations sur la mémoire du circuit intégré, via le circuit de commande de son.

10. Circuit de commande de son selon la revendication 9, caractérisé en ce que les informations stockées dans la mémoire du circuit intégré ne sont accessibles qu'après authentification de l'utilisateur par l'intermédiaire d'un code.
